# EUROPÄISCHE PATENTSCHRIFT

(11) **EP 1 227 231 B1**
(45) Veröffentlichungstag und Bekanntmachung des Hinweises auf die Patenterteilung: **18.10.2006**
(21) Anmeldenummer: 01130175.1
(22) Anmeldetag: 19.12.2001
(51) Int. Cl.: F02D 41/02, F02D 41/14

(54) **Verfahren zum Betreiben eines Dreiweg-Katalysators, welcher eine Sauerstoff speichernde Komponente enthält**
Method of operation of a three-way catalyst, which comprises an oxygen storing element
Procédé de mise en oeuvre d'un catalyseur à trois voies dont un élément peut emmagasiner l'oxygène

(30) Priorität: 27.01.2001 DE 10103772
(43) Veröffentlichungstag der Anmeldung: 31.07.2002
(73) Patentinhaber: Umicore AG & Co. KG, 63457 Hanau-Wolfgang (DE)
(72) Erfinder: Votsmeier, Martin,Dr., 63477 Maintal (DE); Mussmann, Lothar, Dr., 63067 Offenbach (DE); Lindner, Dieter,Dr., 63457 Hanau (DE); Richter, Jörg-Michael, 60318 Frankfurt am Main (DE); Lox, Egbert, Dr., 36355 Hochwaldhausen (DE); Kreuzer, Thomas, Dr., 61184 Karben (DE)
(74) Vertreter: Vossius & Partner

(56) Entgegenhaltungen:
- US-A- 4 024 706
- US-A- 5 088 281
- US-A- 5 390 490
- US-A- 5 901 552

## Beschreibung

Die Erfindung betrifft ein Verfahren zum Betreiben eines Dreiweg-Katalysators, der eine Sauerstoff speichernde Komponente enthält, die einen minimalen und einen maximalen Füllgrad für Sauerstoff aufweist, und der im Abgastrakt eines Verbrennungsmotors angeordnet ist, wobei das dem Motor zugeführte Luft/Kraftstoffgemisch so geregelt wird, daß der Füllgrad der Sauerstoff speichernden Komponente des Katalysators in einem mittleren Sollbereich zwischen minimalem und maximalem Füllgrad gehalten wird.

Zur Reinigung der Abgase von stöchiometrisch betriebenen Verbrennungsmotoren wird ein sogenannter Dreiweg-Katalysator verwendet, der gleichzeitig Kohlenmonoxid (CO), Kohlenwasserstoffe (HC) und Stickoxide (NOx) aus dem Abgas entfernt. Zur Beschreibung der Zusammensetzung des dem Motor zugeführten Luft/Kraftstoff-Gemisches wird häufig die Luftzahl Lambda (λ) verwendet. Dabei handelt es sich um das auf stöchiometrische Bedingungen normierte Luft/Kraftstoff-Verhältnis. Das Luft/Kraftstoff-Verhältnis beschreibt, wieviel Kilogramm Luft pro Kilogramm Kraftstoff dem Verbrennungsmotor zugeführt werden. Das Luft/Kraftstoff-Verhältnis für eine stöchiometrische Verbrennung liegt für übliche Motorkraftstoffe bei 14,7. Die Luftzahl Lambda beträgt in diesem Punkt 1. Luft/Kraftstoff-Verhältnisse unter 14,7, beziehungsweise Luftzahlen unter 1, werden als fett und Luft/Kraftstoff-Verhältnisse über 14,7 oder Luftzahlen über 1 werden als mager bezeichnet.

Treten im Verbrennungsmotor keine Speichereffekte für bestimmte Komponenten des Abgases auf, so entspricht die Luftzahl des Abgases der Luftzahl des dem Motor zugeführten Luft/Kraftstoff-Gemisches. Um einen hohen Umsetzungsgrad aller drei Schadstoffe zu erreichen, muß die Luftzahl Lambda in einem sehr engen Bereich um λ = 1 (stöchiometrische Bedingung) eingestellt werden. Das Intervall um λ = 1, in dem alle drei Schadstoffe zu wenigstens 80% umgesetzt werden, wird häufig als Lambda-Fenster bezeichnet. Zur Einhaltung des Lambda-Fensters wird die Luftzahl mit Hilfe des Signals einer Sauerstoffsonde (Lambdasonde) geregelt. Konventionell wird zu diesem Zweck eine Zwei-Punkt Lambdasonde eingesetzt. Durch die unvermeidliche Trägheit des Regelsystems kommt es bei dieser Zwei-Punkt-Regelung zu einer Modulation der Luftzahl mit einer Frequenz von etwa 1 Hz. Heute kann die Modulation der Luftzahl durch die Verwendung einer linearen Lambdasonde weitgehend vermieden werden.

Um eine Verschlechterung des Katalysatorwirkungsgrades durch die Modulation der Luftzahl oder durch kurzfristige Auswanderungen der Luftzahl zu verhindern, enthalten moderne Dreiweg-Katalysatoren Sauerstoff speichernde Komponenten (Oxygen storage components, OSC) die bei magerem Abgas (λ > 1) Sauerstoff abspeichern und bei fettem Abgas (λ < 1) Sauerstoff abgeben und so die Stöchiometrie des Abgases auf λ = 1 einstellen. Als Sauerstoff speichernde Komponente in einem Katalysator eignen sich alle Verbindungen, die eine Änderung ihres Oxidationszustandes zulassen. Am häufigsten wird Ceroxid eingesetzt, welches sowohl als Ce₂O₃ als auch als CeO₂ vorliegen kann.

Im folgenden wird mit der Speicherkapazität der Sauerstoff speichernden Komponente die Masse Sauerstoff verstanden, die von der Sauerstoff speichernden Komponente pro Gramm aufgenommen werden kann. Dementsprechend bezeichnet der Füllgrad das Verhältnis der tatsächlich abgespeicherten Masse Sauerstoff zur Speicherkapazität. Die Speicherkapazität kann nach verschiedenen, dem Fachmann bekannten Verfahren, experimentell bestimmt werden.

Ziel der Regelung der Luftzahl ist es, eine vollständige Füllung oder eine vollständige Leerung des Sauerstoffspeichers zu vermeiden. Im Falle einer vollständigen Füllung des Katalysators kommt es zu einem Durchbruch von magerem Abgas und damit zur Emission von Stickoxiden. Im Falle einer vollständigen Entleerung kommt es zu Fett-Durchbrüchen, also zur Emission von Kohlenmonoxid und Kohlenwasserstoffen. Gemäß der US 4,024,706 kann bei Dreiweg-Katalysatoren mit Sauerstoff speichernden Komponenten das Lambda-Fenster durch geeignete Modulation des Luft/Kraftstoff-Verhältnisses vergrößert werden. Bevorzugt werden die Modulationsamplitude des Luft/Kraftstoff-Verhältnisses kleiner als 1 und die Modulationsfrequenz größer als 1 Hz gewählt. Ist die Modulationsfrequenz zu gering, so besteht die Gefahr, daß während der mageren Halbwelle der Modulation die Speicherkapazität des Sauerstoffspeichers überschritten wird und mageres Abgas durch den Katalysator durchbricht.

Die Regelung der Luftzahl mit einer einzelnen Lambdasonde vor dem Katalysator erlaubt nicht, die Stöchiometrie des Abgases mit genügend hoher Präzision einzustellen um langfristig eine vollständige Entleerung oder Füllung des Sauerstoffspeichers zu vermeiden. Aus diesem Grund werden neuere Kraftfahrzeuge mit einer zweiten Lambdasonde hinter dem Katalysator ausgerüstet, die den Durchbruch von fettem, beziehungsweise magerem, Abgas registriert und entsprechend gegenregelt. Dies wird als Führungsregelung bezeichnet. Die Führungsregelung erkennt eine vollständige Füllung oder Entleerung des Sauerstoffspeichers aber erst, wenn schon ein Durchbruch von fettem oder magerem Abgas stattgefunden hat. Bedingt durch die Reaktionszeit des Regelmechanismus ist so eine signifikanten Schadstofffreisetzung unvermeidbar.

Gemäß der DE 196 06 652 A1 (US 5,901,552) wird das einem Verbrennungsmotor zugeführte Luft/Kraftstoff-Verhältnis derart geregelt, daß der Füllgrad des Sauerstoffspeichers eines Dreiweg-Katalysators sich stets zwischen einer oberen und einer unteren Grenze befindet. Zur Durchführung dieser Regelung werden die Sauerstoffkomponenten im Abgas vor und hinter dem Katalysator gemessen und die Meßwerte mit Hilfe eines mathematischen Modells ausgewertet. Auf diese Weise kann der Katalysator jederzeit unerwartet auftretende Mager- oder Fett-Abweichungen des Abgases auffangen und so Emissionsdurchbrüche vermeiden. Nachteilig ist hierbei, daß es über eine längere Betriebsdauer zu einer wachsenden Abweichung zwischen dem tatsächlichen Füllgrad und dem theoretisch ermittelten Füllgrad geben kann.

Aufgabe der Erfindung ist die Angabe eines Verfahrens zur Regelung des Füllgrades des Sauerstoffspeichers in einem vorgegebenen Sollbereich auf der Basis von Messungen der Luftzahl des Abgases vor und hinter dem Katalysator.

Diese Aufgabe wird durch das Verfahren gemäß Patentanspruch 1 gelöst. Vorteilhafte Ausgestaltungen und Varianten des Verfahrens werden durch die Unteransprüche beschrieben.

Das Verfahren gemäß Anspruch 1 ist dadurch gekennzeichnet, daß zur Regelung des Luft/Kraftstoffgemisches in einer Prüfphase das Auswandern des Füllgrades aus dem Sollbereich dadurch überprüft wird, daß der Füllgrad ausgehend vom momentanen Ausgangswert durch kurzzeitiges Abmagern oder Anfetten des dem Motor zugeführten Luft/Kraftstoffgemisches um einen Betrag erhöht oder erniedrigt und sogleich wieder auf den Ausgangswert durch eine kurzzeitige, gegenläufige Änderung des Luft/Kraftstoffgemisches zurückgeführt (Mager/Fett-Pulsfolge oder Fett/Mager-Pulsfolge) wird und daß im Falle eines Durchbruchs von magerem oder fettem Abgas durch den Katalysator während der Prüfphase das Luft/Kraftstoffgemisch zur Korrektur des Füllgrades angefettet oder abgemagert wird, wobei der Betrag, um den der Füllgrad während der Prüfphase erhöht oder erniedrigt wird, so bemessen ist, daß kein Durchbruch von magerem oder fettem Abgas durch den Katalysator erfolgt, wenn der Füllgrad der Sauerstoff speichernden Komponente innerhalb des Sollbereiches liegt.

Die Erfindung wird im folgenden an Hand der Figuren 1 bis 8 näher erläutert. Es zeigen:
- **Figur 1:**: Verhalten des Füllgrades der Sauerstoff speichernden Komponente des Katalysators über der Zeit
- **Figur 2:**: Überprüfen einer möglichen Auswanderung des Füllgrades der Sauerstoff speichernden Komponente aus dem Sollbereich mit einer Mager/Fett-Pulsfolge und einer Fett/Mager-Pulsfolge und Regelung der Luftzahl zwischen den Prüfphasen auf einen konstanten Wert
- **Figur 3:**: Überprüfen einer möglichen Auswanderung des Füllgrades der Sauerstoff speichernden Komponente aus dem Sollbereich mit einer verdoppelten Mager/Fett- und einer verdoppelten Fett/Mager-Pulsfolge und Regelung der Luftzahl zwischen den Prüfphasen auf einen konstanten Wert
- **Figur 4:**: Überprüfen einer möglichen Auswanderung des Füllgrades der Sauerstoff speichernden Komponente aus dem Sollbereich mit einer Mager/Fett/Mager-Pulsfolge, wobei der Fettpuls die doppelte Dauer eines Magerpulses aufweist
- **Figur 5:**: Überprüfen einer möglichen Auswanderung des Füllgrades der Sauerstoff speichernden Komponente aus dem Sollbereich mit einer Mager/Fett/Mager-Pulsfolge mit gleicher Dauer aller drei Pulse
- **Figur 6:**: Überprüfen einer möglichen Auswanderung des Füllgrades der Sauerstoff speichernden Komponente aus dem Sollbereich mit einer verdoppelten Mager/Fett- und einer verdoppelten Fett/Mager-Pulsfolge und sinusförmiger Modulation des Luft/Kraftstoff-Verhältnisses zwischen den Prüfphasen
- **Figur 7:**: Überprüfen einer möglichen Auswanderung des Füllgrades der Sauerstoff speichernden Komponente aus dem Sollbereich mit einer Mager/Fett/Mager-Pulsfolge und sinusförmiger Modulation des Luft/Kraftstoff-Verhältnisses zwischen den Prüfphasen
- **Figur 8:**: Überprüfen einer möglichen Auswanderung des Füllgrades der Sauerstoff speichernden Komponente aus dem Sollbereich mit nadelförmigen Pulsfolgen und Sinusmodulation des Luft/Kraftstoff-Verhältnisses zwischen den Prüfphasen

Zur Durchführung des Verfahrens wird die Zusammensetzung des dem Verbrennungsmotor zugeführten Luft/Kraftstoffgemisches bevorzugt mit Hilfe eines Sauerstoffsensors geregelt, der vor dem Katalysator im Abgastrakt angeordnet ist. Der mögliche Durchbruch von magerem oder fettem Abgas durch den Katalysator kann mit einem zweiten Sauerstoffsensor ermittelt werden, der hinter dem Katalysator im Abgastrakt angeordnet ist.

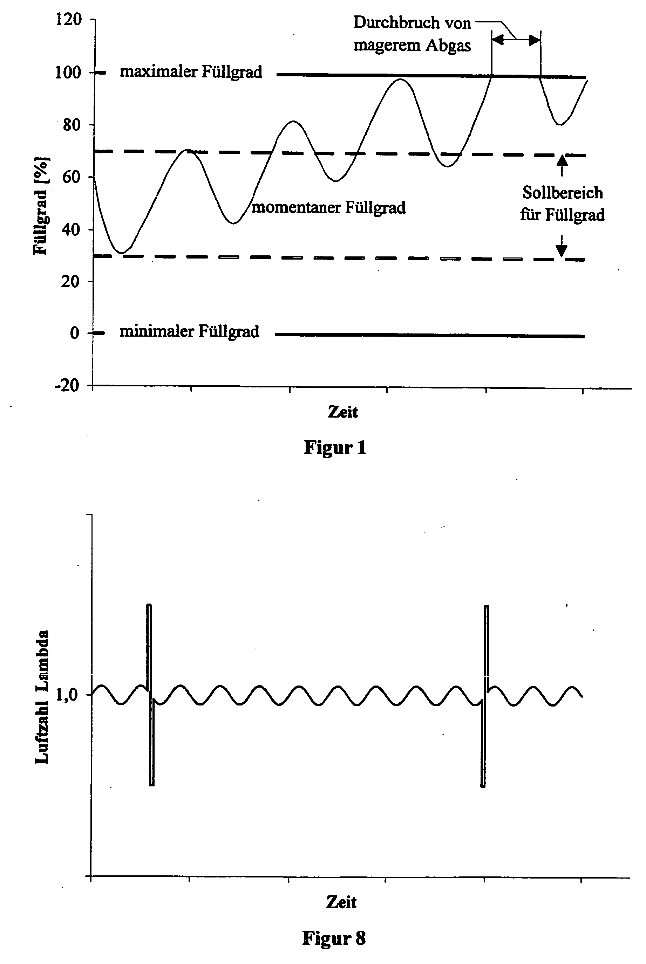

Figur 1 zeigt das häufig beobachtete Verhalten des Füllgrades der Sauerstoff speichernden Komponente eines Dreiweg-Katalysators in Abhängigkeit von der Zeit. Minimaler und maximaler Füllgrad sind durch durchgezogene, horizontale Linien gekennzeichnet. Der Sollbereich für den Füllgrad wird in Figur 1 durch gestrichelte Linien begrenzt.

Der Füllgrad des Sauerstoffspeichers folgt im wesentlichen der Modulation des dem Verbrennungsmotor zugeführten Luft/Kraftstoff-Gemisches. Aufgrund einer Alterung des vor dem Katalysator angeordneten Sauerstoffsensors oder auch aufgrund der Alterung des Katalysators selber wandert der Füllgrad aus dem vorgesehenen Sollbereich aus und erreicht schließlich den maximalen oder minimalen Füllgrad. Eine weitere Erhöhung oder Erniedrigung des Füllgrades geht nur noch langsam voran und kann für die praktischen Erfordernisse vernachlässigt werden. In Figur 1 ist dieses Verhalten in idealisierter Form durch eine Kappung der Modulation des Füllgrades an der Grenzlinie für den maximalen Füllgrad dargestellt. In diesem Bereich kann der Katalysator den überschüssigen Sauerstoff nicht mehr Abspeichern und es kommt zu einem Durchbruch des mageren Abgases durch den Katalysator.

Der Füllgrad des Sauerstoffspeichers kann durch die Stöchiometrie des Abgases eingestellt werden. Wichtig für die optimale Funktion des Dreiweg-Katalysators ist es nun, möglichst rechtzeitig eine Auswandern des Füllgrades aus seinem Sollbereich zu erkennen, um durch Ändern der Abgaszusammensetzung den Füllgrad wieder in den Sollbereich zurückholen zu können.

Zur Überprüfung des momentanen Füllgrades wird der Füllgrad kurzzeitig durch einen Magerpuls oder einen Fettpuls erhöht oder erniedrigt. Unter den Begriffen "Magerpuls" oder "Fettpuls" wird im Rahmen dieser Erfindung das kurzzeitige Erhöhen oder Erniedrigen des Luft/Kraftstoff-Verhältnisses bezeichnet. Dies geschieht mit Hilfe der Motorsteuerung, die das Luft/Kraftstoff-Gemisch kurzzeitig abmagert oder anfettet. Wichtig ist dabei für das erfindungsgemäße Verfahren, daß der Betrag der Abmagerung oder Anfettung gleich wieder durch eine entsprechend gegenläufige Änderung des Luft/Kraftstoff-Verhältnisses kompensiert wird, so daß nach Abschluß der Prüfphase der Füllgrad wieder auf den Ausgangswert zu Beginn der Prüfphase zurückgeführt wird. Auf einen Magerpuls muß also ein Fettpuls folgen und umgekehrt.

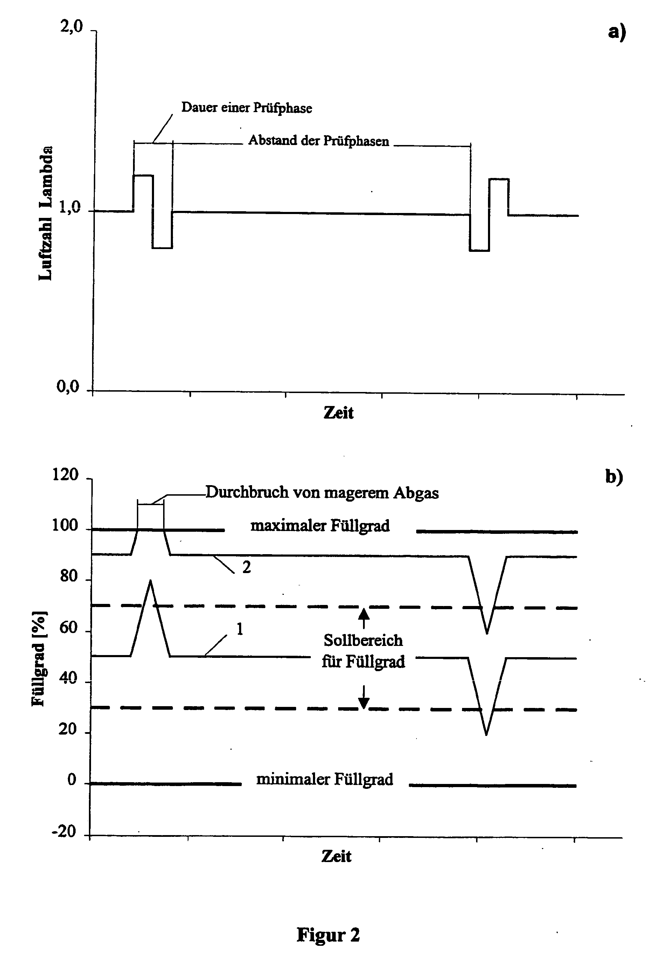

Die konkrete Pulsform ist für das Verfahren von untergeordneter Bedeutung. Zum besseren Verständnis der Erfindung wird in den Figuren 2 bis 5 allerdings von idealisierten, rechteckförmigen Pulsen ausgegangen.

Figur 2 verdeutlicht den Ablauf der Katalysatorüberprüfung. Diagramm 2a) zeigt den Verlauf der Luftzahl des Abgases vor dem Eintritt in den Dreiweg-Katalysator, während Diagramm 2b) den zugeordneten Verlauf des Füllgrades der Sauerstoff speichernden Komponente des Katalysators wiedergibt.

Zur Überprüfung der relativen Lage des momentanen Füllgrades zum maximalen Füllgrad wird die Luftzahl zunächst für kurze Zeit angehoben und sofort anschließend um den selben Betrag abgesenkt (Mager/Fett-Pulsfolge). In Diagramm 2a) sind der Magerpuls und der entsprechende Gegenpuls (Fettpuls) in idealisierter Form als Rechteckpulse dargestellt. Kurve 1 in Diagramm 2b) zeigt den entsprechenden Verlauf des Füllgrades für den Fall, daß der momentane Füllgrad sich in der Mitte des Sollbereiches befindet. In diesem Fall ist der Verlauf des momentanen Füllgrades gleich dem Integral des Verlaufs der Luftzahl, das heißt der Füllgrad nimmt während des Magerpulses linear zu und wird durch den entsprechenden Gegenpuls wieder auf den Ausgangswert zurückgeführt. Da der Füllgrad hierbei noch nicht den maximalen Füllgrad erreicht, bleibt die Luftzahl des Abgases hinter dem Katalysator unverändert bei einem Wert von 1. Diese Verhältnisse ändern sich erst, wenn der momentane Füllgrad auf Grund einer Fehlfunktion zum Beispiel nach oben aus dem Sollbereich ausgewandert ist. Diese Situation wird durch Kurve 2 dargestellt. Der Magerpuls führt jetzt dazu, daß zumindest während eines kurzen Zeitintervalls der Füllgrad seinen maximalen Wert annimmt. Während dieses kurzen Zeitintervalls kann der Katalysator keinen weiteren Sauerstoff abspeichern und es kommt zu einem Durchbruch des mageren Abgases durch den Katalysator. Zur Überprüfung der relativen Lage des momentanen Füllgrades zum minimalen Füllgrad wird in entsprechend umgekehrter Weise vorgegangen, das heißt die relative Lage zum minimalen Füllgrad wird mit einer invertierten Pulsfolge, das heißt mit einer Fett/Mager-Pulsfolge, überprüft.

Wird bei der Mager/Fett-Pulsfolge hinter dem Katalysator ein Durchbruch von magerem Abgas durch den Katalysator festgestellt, so wird von der Motorsteuerung eine Korrektur des Füllgrades durch kurzzeitiges Anfetten des dem Motor zugeführten Luft/Kraftstoff-Gemisches vorgenommen (Korrektursprung). In entsprechender Weise wird beim Durchbruch von fettem Abgas durch den Katalysator während einer Fett/Mager-Pulsfolge vorgegangen. Zusätzlich zu dieser kurzfristigen Korrektur des Füllgrades kann der in den Prüfphasen festgestellte Korrekturbedarf zu einer Anpassung der Parameter für die Regelung des Luft/Kraftstoff-Verhältnisses (Lambda-Regelung) verwendet werden, um so das Auswandern des Füllgrades aus dem Sollbereich zu verlangsamen.

Die Fläche unter den Pulsen, das heißt ihr zeitliches Integral relativ zur Luftzahl 1,0, bestimmt den Betrag, um den der Füllgrad während der Prüfung erhöht oder erniedrigt wird. Im Falle eines Magerpulses ist diese Fläche zum Beispiel ein Maß für das über den Katalysator während der Prüfung geführte Sauerstoffvolumen. Im folgenden wird deshalb auch vom Volumen der Prüfpulse gesprochen. Dieses Volumen sollte so gewählt werden, daß die dadurch bewirkte Änderung des Füllgrades gerade noch nicht an den maximalen oder minimalen Füllgrad heranführt, wenn der momentane Ausgangswert des Füllgrades innerhalb des Sollbereiches für den Füllgrad liegt.

Wie schon oben ausgeführt wurde, ist die konkrete Pulsform für das vorgeschlagene Verfahren von untergeordneter Bedeutung. Dies gilt auch für die Art und Weise wie das notwendige Volumen der Pulse zur Verfügung gestellt wird, das heißt für die Fläche, die sie mit der Linie für die Luftzahl 1 einschließen. Das notwendige Volumen kann also sowohl durch sehr kurze aber hohe Pulse als auch durch lange und niedrige Pulse gebildet werden. Die untere Grenze für die zeitliche Länge der Pulse ist durch die Anfettung oder Abmagerung des Luft/Kraftstoffgemisches für nur einen Zylinder des Verbrennungsmotors gegeben. Die maximal zulässige Höhe der Pulse hängt von der Bauart des Motors ab.

Die Überprüfung des Füllgrades gemäß dem vorgeschlagenen Verfahren verursacht einen Kraftstoffmehrverbrauch. Dieser Kraftstoffinehrverbrauch ist ursächlich gekoppelt an die Speicherkapazität der Sauerstoff speichernden Komponenten und die Breite des Sollbereiches, das heißt an das für die Prüfung benötigte Volumen der Pulse. Der Kraftstoffmehrverbrauch ist deshalb in erster Näherung unabhängig von der verwendeten Pulsform und der gewählten Dauer der Pulse.

Die Prüfung muß in bestimmten Abständen wiederholt werden. Zur Minimierung des durch die Prüfung bedingten Kraftstoffmehrverbrauchs ist es daher wichtig, die Häufigkeit oder Frequenz der Prüfphasen möglichst niedrig zu wählen. Die Häufigkeit kann durch die Motorsteuerung den momentanen Betriebszuständen laufend angepaßt werden. So sind zum Beispiel in Fahrsituationen mit plötzlichen Beschleunigungen die Prüfangen häufiger vorzunehmen als währen einer konstanten Fahrt. Die Festlegung der optimalen Frequenz kann zum Beispiel durch ein Kennfeld, ein neuronales Netzwerk oder eine Fuzzy-Logik erfolgen. Darüber hinaus kann der während einer Prüfphase festgestellte Korrekturbedarf auch noch dazu benutzt werden, die Regelparameter für die Regelung des Luft/Kraftstoff-Verhältnisses (Lambda-Regelung) an die Regelabweichung so anzupassen, daß die Geschwindigkeit, mit der der Füllgrad aus dem Sollbereich auswandert, verringert wird. Der Abstand zwischen zwei Prüfphasen kann dann mit Hilfe einer intelligenten Motorsteuerung entsprechend verlängert werden.

Weiterhin besteht die Möglichkeit, das vorgeschlagene Verfahren mit dem in der DE 196 06 652 A1 beschriebenen Verfahren zu kombinieren. Die in den Prüfphasen festgestellten Abweichungen zwischen dem Istzustand des Füllgrades und dem mathematischen Modell können dann verwendet werden um den in der Berechnung verwendeten Füllgrad auf den tatsächlichen Füllgrad zurückzusetzen. Auf diese Weise kann vermieden werden, dass durch Akkumulation kleiner Fehler bei der Integration der Modellgleichungen eine zu große Abweichung zwischen dem berechneten und dem realen Füllgrad entsteht. Zusätzlich können die in den Prüfphasen festgestellten Abweichungen zwischen Istzustand und mathematischem Modell zur Feinkorrektur der Parameter des mathematischen Modells genutzt werden. Auf diese Weise wird eine weitere Verringerung der Häufigkeit der Prüfphasen erreicht.

Wie schon erläutert, kann die mögliche Auswanderung des Füllgrades aus dem Sollbereich nach oben durch eine Mager/Fett-Pulsfolge und die Auswanderung nach unten durch eine Fett/Mager-Pulsfolge überprüft werden. Um beide Überprüfungen während des Motorbetriebs vorzunehmen ist es daher sinnvoll, die Pulsfolge in aufeinanderfolgenden Prüfphasen jeweils zu invertieren, so daß auf eine Prüfung mit einer Mager/Fett-Pulsfolge eine Prüfung mit einer Fett/Mager-Pulsfolge folgt. Solche alternierenden Prüfphasen sind in Figur 2, Diagramm a), dargestellt.

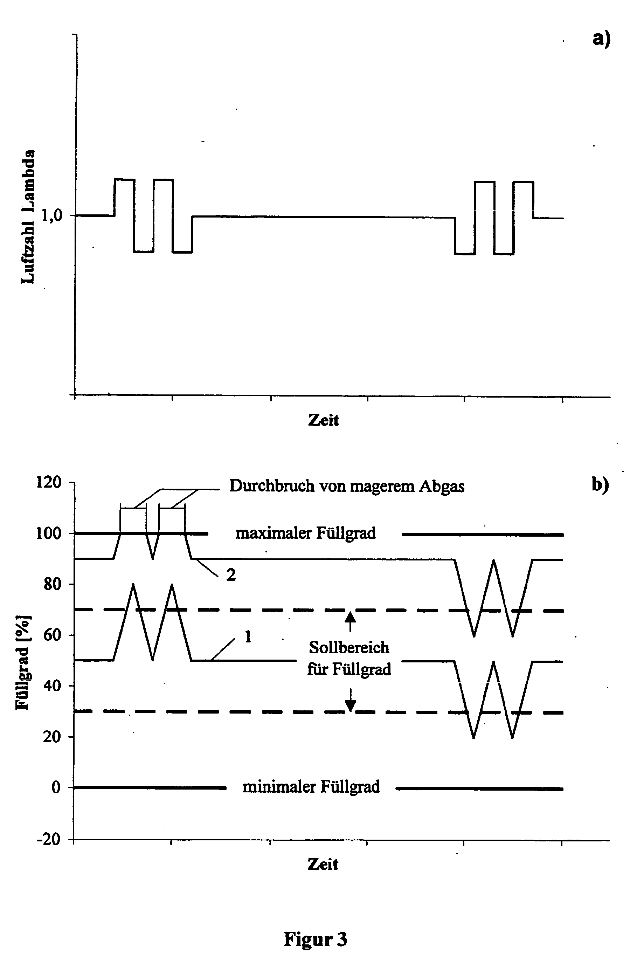

Figur 3 zeigt zwei alternierende Prüfphasen und die zugeordnete Variation des Füllgrades für den Fall, daß die gewählte Pulsfolge innerhalb einer Prüfphase verdoppelt wird, um die Erkennbarkeit des Auswanderns des Füllgrades aus dem Sollbereich zu verbessern. Auch eine mehrfache Wiederholung der gewählten Pulsfolge innerhalb einer Prüfphase ist möglich. Allerdings erhöht sich hierbei der Kraftstoffmehrverbrauch entsprechend, so daß die Zahl der Wiederholungen auf maximal 5 beschränkt werden sollte.

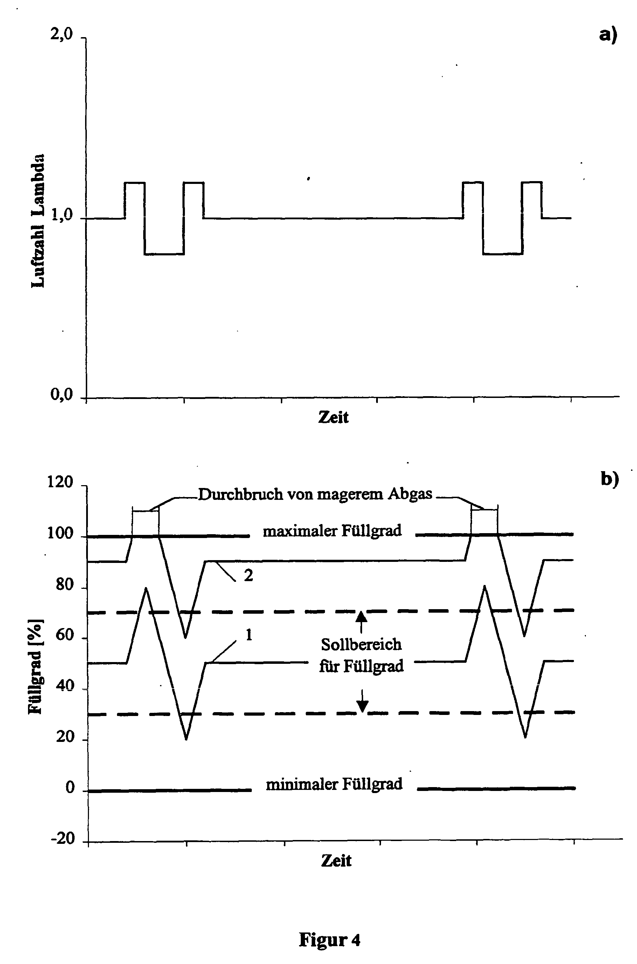

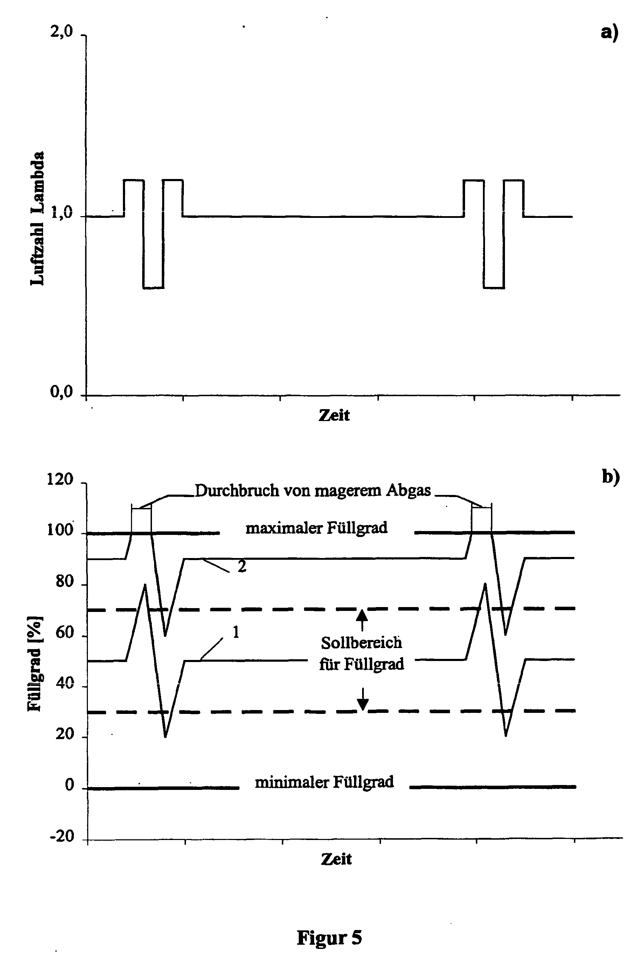

Besonders vorteilhaft gestaltet sich das Verfahren, wenn jeweils zwei aufeinanderfolgende, alternierende Prüfphasen zu einer einzigen Prüfphase zusammengezogen werden, so daß sowohl das Auswandern des Füllgrades aus dem Sollbereich nach oben als auch nach unten innerhalb einer Prüfphase überprüft wird. Hierbei sind zwei verschiedene Pulsfolgen möglich, die jedoch ein gleichwertiges Ergebnis liefern, nämlich zum einen eine Mager/Fett/Mager-Pulsfolge und zum anderen eine Fett/Mager/Fett-Pulsfolge. Pulsdauer und Pulshöhe des jeweils mittleren Pulses müssen dabei so bemessen werden, daß der Füllgrad nach Abschluß der Prüfphase wieder auf seinen Ausgangswert vor Beginn der Prüfung zurückgeführt wird, das heißt das Volumen des mittleren Pulses muß so groß sein wie das der beiden äußeren Pulse zusammen. Dies kann entweder durch eine Verdoppelung der Dauer (siehe Figur 4) oder durch eine Verdoppelung der Amplitude des mittleren Pulses (siehe Figur 5) geschehen. Wie die Erläuterungen zur Bedeutung der Pulsform für das Verfahren gezeigt haben, sind auch beliebige Zwischenformen des mittleren Pulses möglich, solange die Bedingung der Zurückführung des Füllgrades auf seinen Ausgangswert nach Beendigung der Prüfphase erfüllt wird.

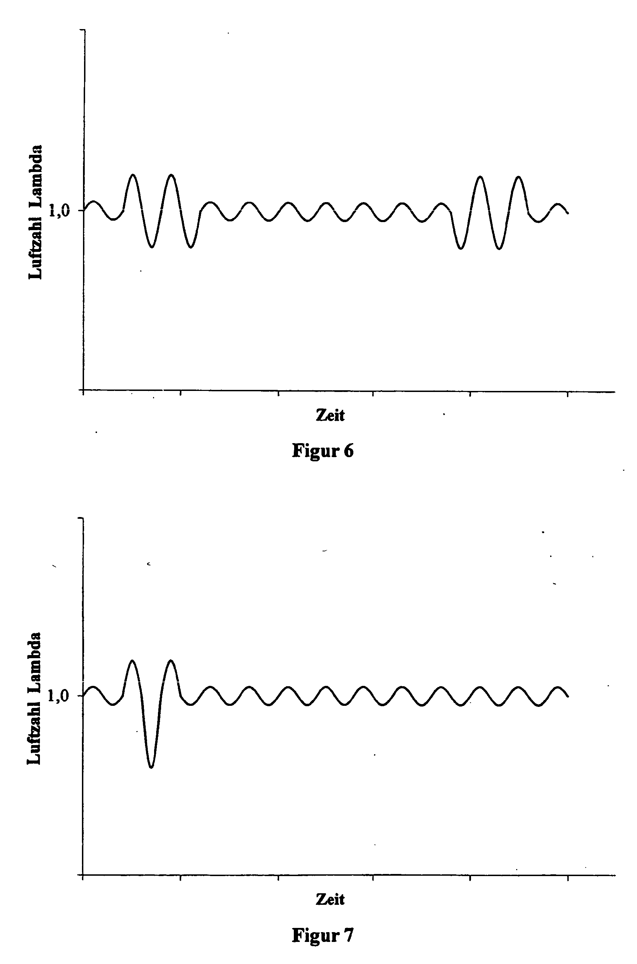

Das vorgeschlagene Verfahren kann sowohl in Kombination mit einer Regelung des auf stöchiometrische Bedingungen normierten Luft/Kraftstoff-Verhältnisses Lambda auf einen konstanten Wert um λ = 1 als auch in Kombination mit einer Modulation des Luft/Kraftstoff-Verhältnisses eingesetzt werden. Im ersten Fall wird die Luftzahl Lambda zwischen zwei aufeinanderfolgenden Prüfphasen auf den konstanten Wert geregelt, während im zweiten Fall das Luft/Kraftstoff-Verhältnis zwischen zwei aufeinanderfolgenden Prüfphasen mit einer Frequenz zwischen 0,1 und 5 Hz und einer Amplitude zwischen ±0,1 und ±2,0 moduliert wird. Die in den Prüfphasen angewendeten Pulsfolgen werden dabei zweckmäßigerweise in ihrer Pulsdauer an die Periodendauer der Modulation angepaßt und phasenrichtig überlagert. Diese Vorgehensweise ist beispielhaft in den Figuren 6 und 7 dargestellt.

Figur 8 zeigt eine weitere Variante des beanspruchten Verfahrens. Das dem Motor zugeführte Luft/Kraftstoff-Gemisch wird wieder wie in den Verfahren nach den Figuren 6 und 7 zwischen den Prüfphasen sinusförmig moduliert. Die Prüfphasen entsprechen denen von Figur 2 mit dem Unterschied, daß die relativ breiten und niedrigen Prüfpulse durch nadelförmige Pulse, das heißt durch sehr schmale aber hohe Pulse ersetzt wurden. Auch für die nadelförmigen Prüfpulse gilt natürlich die Bedingung, daß ihr Volumen der Speicherkapazität des Katalysators angepaßt sein muß. Die zeitliche Dauer der in den Prüfphasen angewendeten Nadelpulse beträgt bevorzugt zwischen 1 und 50% der Periodendauer der Modulation des Luft/Kraftstoff-Verhältnisses. Zweckmäßigerweise werden die Prüfphasen dann eingeleitet, wenn der Füllgrad infolge der Sinusmodulation seinen maximalen oder minimalen Wert erreicht hat. Dies ist in den Wendepunkten der Modulationskurven der Fall. Die Prüfphase mit der Mager/Fett-Pulsfolge wird also zum Beispiel dem Luft/Kraftstoffverhältnis dann überlagert, wenn das Luft/Kraftstoff-Verhältnis durch einen Wendepunkt mit negativer Steigung geht und der Füllgrad somit seinen maximalen Wert erreicht hat. Entsprechend umgekehrt wird mit der Fett/Mager-Pulsfolge verfahren.

Mit zunehmender Alterung des Katalysators vermindert sich seine Speicherkapazität. Somit verringert sich der Abstand zwischen dem minimalen und maximalen Füllgrad und den entsprechenden Grenzen des Sollbereiches. Mit zunehmender Alterung des Katalysators muß daher das Volumen der Prüfpulse vermindert werden. Die notwendige Anpassung kann automatisch vorgenommen werden. Hierzu wird von der Motorsteuerung registriert, wie häufig direkt aufeinanderfolgend Durchbrüche von magerem und fettem Abgas auftreten. Werden solche Doppeldurchbrüche zu häufig registriert, ist dies ein Zeichen für eine verminderte Speicherkapazität des Katalysators und das Volumen der Prüfpulse muß verringert werden. Mit zunehmender Schädigung der Sauerstoffspeicherkapazität des Katalysators kann auch die Breite des Sollbereiches verringert werden.

In gleicher Weise wie das Volumen der Prüfpulse muß auch die Amplitude des Korrektursprungs nach einem festgestellten Durchbruch von fettem oder magerem Abgas angepaßt werden. Durch den Korrektursprung sollte der momentane Füllgrad in die Mitte des Sollbereiches zurückgeholt werden.

Die automatische Anpassung des Volumens der Prüfpulse eignet sich zur Entscheidung darüber, wann der Katalysator wegen schwerwiegender Schädigung seiner Speicherkapazität ausgewechselt werden muß. Zu diesem Zweck wird ein Mindestvolumen für die Prüfpulse festgelegt. Das Volumen der Prüfpulse wird mit zunehmender Schädigung des Katalysators bis auf das Mindestvolumen reduziert. Ist das Mindestvolumen der Prüfpulse erreicht, so kann ein Signal zum Auswechseln des Katalysators gesetzt werden.

## Patentansprüche

1. Verfahren zum Betreiben eines Dreiweg-Katalysators, der eine Sauerstoff speichernde Komponente enthält, die einen minimalen und einen maximalen Füllgrad für Sauerstoff aufweist, und der im Abgastrakt eines Verbrennungsmotors angeordnet ist, wobei das dem Motor zugeführte Luft/Kraftstoffgemisch so geregelt wird, daß der Füllgrad der Sauerstoff speichernden Komponente des Katalysators in einem mittleren Sollbereich zwischen minimalem und maximalem Füllgrad gehalten wird,
**dadurch gekennzeichnet,**
**daß** zur Regelung des Luft/Kraftstoffgemisches in einer Prüfphase das Auswandern des Füllgrades aus dem Sollbereich dadurch überprüft wird, daß der Füllgrad ausgehend vom momentanen Ausgangswert durch kurzzeitiges Abmagern oder Anfetten des dem Motor zugeführten Luft/Kraftstoffgemisches um einen Betrag erhöht oder erniedrigt und sogleich wieder auf den Ausgangswert durch eine kurzzeitige, gegenläufige Änderung des Lufr/Kraftstoffgemisches zurückgeführt (Mager/Fett-Pulsfolge oder Fett/Mager-Pulsfolge) wird und daß im Falle eines Durchbruchs von magerem oder fettem Abgas durch den Katalysator während der Prüfphase das Luft/Kraftstoffgemisch zur Korrektur des Füllgrades angefettet oder abgemagert wird, wobei der Betrag, um den der Füllgrad während der Prüfphase erhöht oder erniedrigt wird, so bemessen ist, daß kein Durchbruch von magerem oder fettem Abgas durch den Katalysator erfolgt, wenn der Füllgrad der Sauerstoff speichernden Komponente innerhalb des Sollbereiches liegt.

2. Verfahren nach Anspruch 1,
**dadurch gekennzeichnet,**
**daß** die Zusammensetzung des dem Verbrennungsmotor zugeführten Luft/Kraftstoffgemisches mit Hilfe eines Sauerstoffsensors geregelt wird, der vor dem Katalysator im Abgastrakt angeordnet ist und daß der mögliche Durchbruch von magerem oder fettem Abgas durch den Katalysator mit einem zweiten Sauerstoffsensor ermittelt wird, der hinter dem Katalysator im Abgastrakt angeordnet ist.

3. Verfahren nach Anspruch 2,
**dadurch gekennzeichnet,**
**daß** die Prüfphase während des Motorbetriebs mehrfach wiederholt wird, wobei der zeitliche Abstand zwischen zwei Prüfphasen an die jeweiligen Betriebsbedingungen des Motors und an die festgestellte Regelabweichung angepaßt wird.

4. Verfahren nach Anspruch 3,
**dadurch gekennzeichnet,**
**daß** die Pulsfolge in aufeinanderfolgenden Prüfphasen jeweils invertiert wird, so daß auf eine Prüfung mit einer Mager/Fett-Pulsfolge eine Prüfung mit einer Fett/Mager-Pulsfolge folgt.

5. Verfahren nach Anspruch 4,
**dadurch gekennzeichnet,**
**daß** jeweils zwei aufeinanderfolgende Prüfphasen zu einer einzigen Prüfphase zusammengezogen werden, so daß die Prüfung mit einer Mager/Fett/Mager-Pulsfolge oder mit einer Fett/Mager/Fett-Pulsfolge erfolgt, wobei Pulsdauer und Pulshöhe des jeweils mittleren Pulses so bemessen werden, daß der Füllgrad nach Abschluß der Prüfphase wieder seinen Ausgangswert vor Beginn der Prüfung annimmt.

6. Verfahren nach Anspruch 3,
**dadurch gekennzeichnet,**
**daß** der in den Prüfphasen festgestellte Korrekturbedarf für den Füllgrad zu einer Anpassung der Parameter für die Regelung des Luft/Kraftstoff-Verhältnisses (Lambda-Regelung) mit Hilfe des vor dem Katalysator angeordneten Sauerstoffsensors verwendet wird.

7. Verfahren nach Anspruch 3,
**dadurch gekennzeichnet,**
**daß** das auf stöchiometrische Bedingungen normierte Luft/Kraftstoff-Verhältnis Lambda zwischen zwei aufeinanderfolgenden Prüfphasen auf einen konstanten Wert um λ =1 geregelt wird.

8. Verfahren nach Anspruch 3,
**dadurch gekennzeichnet,**
**daß** das Luft/Kraftstoff-Verhältnis zwischen zwei aufeinanderfolgenden Prüfphasen mit einer Frequenz zwischen 0,1 und 5 Hz und einer Amplitude des Luft/Kraftstoff-Verhältnisses zwischen ±0,1 und ±2,0 moduliert wird.

9. Verfahren nach Anspruch 8,
**dadurch gekennzeichnet,**
**daß** die in den Prüfphasen angewendeten Pulsfolgen der Modulation des Luft/Kraftstoffverhältnisses phasenrichtig überlagert werden.

10. Verfahren nach Anspruch 8,
**dadurch gekennzeichnet,**
**daß** die zeitliche Dauer der in den Prüfphasen angewendeten Pulsfolgen zwischen 1 und 50% der Periodendauer der Modulation des Luft/Kraftstoff-Verhältnisses beträgt und die Prüfphasen dem Luft/Kraftstoff-Verhältnis in seinen Wendepunkten überlagert werden.

11. Verfahren nach Anspruch 1,
**dadurch gekennzeichnet,**
**daß** das Volumen der Pulse, definiert als ihr zeitliches Integral relativ zur Luftzahl 1, während der Lebensdauer des Katalysators zur Anpassung an die sinkende Speicherkapazität des Katalysators vermindert wird.

12. Verfahren nach Anspruch 11,
**dadurch gekennzeichnet,**
**daß** beim Unterschreiten eines Mindestvolumens der Pulse ein Signal zum Austausch des Katalysators gesetzt wird.

13. Verfahren nach Anspruch 1,
**dadurch gekennzeichnet,**
**daß** die gewählte Pulsfolge innerhalb der Prüfphase mehrfach wiederholt wird.

14. Verfahren nach Anspruch 1,
**dadurch gekennzeichnet,**
**daß** zur Regelung des Luft/Kraftstoffgemisches in einer ersten Prüfphase das Auswandern des Füllgrades aus dem Sollbereich nach oben dadurch überprüft wird, daß der Füllgrad ausgehend vom momentanen Ausgangswert durch kurzzeitiges Abmagern des dem Motor zugeführten Luft/Kraftstoftgemisches um einen ersten Betrag erhöht und sogleich wieder auf den Ausgangswert durch kurzzeitiges Anfetten des Luft/Kraftstoffgemisches zurückgeführt (Mager/Fett-Pulsfolge) wird, und in einer zweiten Prüfphase das Auswandern des Füllgrades aus dem Sollbereich nach unten dadurch überprüft wird, daß der Füllgrad ausgehend vom momentanen Ausgangswert durch kurzzeitiges Anfetten des dem Motor zugeführten Luft/Kraftstoffgemisches um einen zweiten Betrag erniedrigt und sogleich wieder auf den Ausgangswert durch kurzzeitiges Abmagern des Luft/Kraftstoffgemisches zurückgeführt (Fett/Mager-Pulsfolge) wird und daß im Falle eines Durchbruchs von magerem Abgas durch den Katalysator während der Mager/Fett-Pulsfolge das Luft/Kraftstoffgemisch zur Korrektur des Füllgrades angefettet und im Falle eines Durchbruchs von fettem Abgas durch den Katalysator während der Fett/Mager-Pulsfolge das Luft/Kraftstoffgemisch abgemagert wird, wobei die Beträge, um die der Füllgrad während der Prüfphasen erhöht oder erniedrigt wird so bemessen sind, daß kein Durchbruch von magerem oder fettem Abgas durch den Katalysator erfolgt, wenn der Füllgrad der Sauerstoff speichernden Komponente innerhalb des Sollbereiches liegt.

15. Verfahren nach Anspruch 1,
**dadurch gekennzeichnet,**
**daß** zur Regelung des Luft/Kraftstoffgemisches das Ausbrechen des Füllgrades aus dem Sollbereich nach oben oder unten während einer Prüfphase dadurch überprüft wird, daß der Füllgrad ausgehend vom momentanen Ausgangswert durch kurzzeitige Abmagerung des dem Motor zugeführten Luft/Kraftstoffgemisches um einen ersten Betrag erhöht, danach durch kurzzeitiges Anfetten des Luft/Kraftstoffgemisches um einen zweiten Betrag gegenüber dem Ausgangswert erniedrigt und anschließend wieder auf den Ausgangswert durch kurzzeitiges Abmagern des Luft/Kraftstoffgemisches zurückgeführt wird (Mager/Fett/Mager-Pulsfolge) und daß im Falle eines Durchbruchs von magerem Abgas durch den Katalysator das Luft/Kraftstoffgemisch zur Korrektur des Füllgrades angefettet und im Falle eines Durchbruchs von fettem Abgas durch den Katalysator das Luft/Kraftstoffgemisch abgemagert wird, wobei die Beträge, um die der Füllgrad während der Prüfphase erhöht oder erniedrigt wird, so bemessen sind, daß kein Durchbruch von magerem oder fettem Abgas durch den Katalysator erfolgt, wenn der Füllgrad der Sauerstoff speichernden Komponente innerhalb des Sollbereiches liegt.

## Claims

1. A process for operating a three-way catalyst which contains an oxygen storage component having a minimum and a maximum filling degree for oxygen, and which is located in the exhaust gas line of an internal combustion engine, wherein the air/fuel mixture supplied to the engine is varied in such a way that the filling degree of the oxygen storage component in the catalyst is held within a setpoint interval between the minimum and maximum filling degree,
**characterised in that**
to regulate the air/fuel mixture, migration of the filling degree out of the setpoint interval is checked in a test phase in such a way that the filling degree is increased or lowered relative to the instantaneous value (initial value) by short-term enrichment or reduction in richness of the air/fuel mixture supplied to the engine by a certain amount and immediately returning to the initial value by a short-term opposing change in the air/fuel mixture (lean/rich pulse sequence or rich/lean pulse sequence) and that in the case of a breakthrough of lean or rich exhaust gas through the catalyst during the test phase, the air/fuel mixture is enriched or reduced in richness in order to correct the filling degree, wherein the amount by which the filling degree during the test phase is increased or decreased is such that no breakthrough of lean or rich exhaust gas through the catalyst takes place when the filling degree of the oxygen storage component is within the setpoint interval.

2. A process according to Claim 1,
**characterised in that**
the composition of the air/fuel mixture supplied to the internal combustion engine is varied with the aid of an oxygen sensor which is located in the exhaust gas line upstream of the catalyst and that a possible breakthroughof lean or rich exhaust gas through the catalyst is determined with a second oxygen sensor which is located in the exhaust gas line downstream of the catalyst.

3. A process according to Claim 2,
**characterised in that**
the test phase is repeated several times while the engine is running, wherein the interval of time between two test phases is adjusted to the particular operating conditions of the engine and to the deviation detected.

4. A process according to Claim 3,
**characterised in that**
the pulse sequence in sequential test phases is inverted so that a test with a rich/lean pulse sequence follows a test with a lean/rich pulse sequence.

5. A process according to Claim 4,
**characterised in that**
the two test phases which follow each other are combined into a single test phase so that the test is performed with a lean/rich/lean pulse sequence or with a rich/lean/rich pulse sequence, wherein the duration of the pulse and the height of the pulse in each middle pulse are such that the filling degree after completing the test phase again takes on the same value as the initial value before the start of the test.

6. A process according to Claim 3,
**characterised in that**
the need for a correction to the filling degree detected in the test phases is used to adjust the parameter for varying the air/fuel ratio (lambda regulation) with the aid of the oxygen sensor located upstream of the catalyst.

7. A process according to Claim 3,
**characterised in that**
the air/fuel ratio lambda normalised to stoichiometric conditions is varied between two sequential test phases to give a constant value around λ=1.

8. A process according to Claim 3,
**characterised in that**
the air/fuel ratio is modulated with a frequency between 0.1 and 5 Hz and an amplitude of the air/fuel ratio between ±0.1 and ±2.0 between two sequential test phases.

9. A process according to Claim 8,
**characterised in that**
the pulse sequences used in the test phases, are superimposed on the modulation of the air/fuel ratio in line with the phase.

10. A process according to Claim 8,
**characterised in that**
the duration of the pulse sequences used in the test phases is between 1 and 50 % of the period of modulation of the air/fuel ratio and the test phase is superimposed on the air/fuel ratio at its turning points.

11. A process according to Claim 1,
**characterised in that**
the volume of the pulses, defined as their integral over time with respect to the air/fuel ration 1, is reduced during the working lifetime of the catalyst in order to adjust it to the shrinking storage capacity of the catalyst.

12. A process according to Claim 11,
**characterised in that**
on falling below a minimum volume of pulse, a signal to replace the catalyst is triggered.

13. A process according to Claim 1,
**characterised in that**
the chosen pulse sequence is repeated several times within the test phase.

14. A process according to Claim 1,
**characterised in that**
to control the air/fuel mixture, in a first test phase migration of the filling degree upwards from the setpoint interval is checked, such that the filling degree, starting from the instantaneous value (initial value), is increased by a first amount by short-term reduction in the richness of the air/fuel mixture supplied to the engine and immediately is returned to the initial value by short-term enrichment of the air/fuel mixture (lean/rich pulse sequence), and in a second test phase, migration of the filling degree downwards from the setpoint interval is checked, such that the filling degree starting from the initial value is lowered by a second amount by short-term enrichment of the air/fuel mixture supplied to the engine and immediately returned to the initial value by a short-term reduction in the richness of the air/fuel mixture (rich/lean pulse sequence) and that in the event of a breakthrough of lean exhaust gas through the catalyst, during the lean/rich pulse sequence, the air/fuel mixture is enriched to correct the filling degree and in the event of a breakthrough of rich exhaust gas through the catalyst during the rich/lean pulse sequence, the air/fuel mixture is reduced in richness, wherein the amounts by which the filling degree is increased or reduced during the test phases is such that no breakthrough of lean or rich exhaust gas through the catalyst takes place when the filling degree of the oxygen storage component is within the setpoint interval.

15. A process according to Claim 1,
**characterised in that**
in order to control the air/fuel mixture, the migration of the filling degree upwards or downwards out of the setpoint interval during a test phase is checked in such a way that the filling degree starting from the instantaneous value (initial value) is increased by a first amount by a short-term reduction in the richness of the air/fuel mixture supplied to the engine, during a test phase, then decreased by a second amount as compared with the initial value by short-term enrichment of the air/fuel mixture and then returned to the initial value by a short-term reduction in the richness of the air/fuel mixture (lean/rich/lean pulse sequence) and that in the event of a breakthrough of lean exhaust gas through the catalyst, the air/fuel mixture is enriched to correct the filling degree and in the event of a breakthrough of rich exhaust gas through the catalyst, the air/fuel mixture is reduced in richness, wherein the amounts by which the filling degree is increased or reduced during the test phase are such that no breakthrough of lean or rich exhaust gas through the catalyst takes place when the filling degree of the oxygen storage component is within the setpoint interval.

## Revendications

1. Procédé de mise en oeuvre d'un catalyseur à trois voies dont un élément peut emmagasiner l'oxygène à des taux de charge d'oxygène maximum et minimum, et qui est placé dans la ligne des gaz d'échappement d'un moteur à combustion interne, le mélange air/carburant amené au moteur étant réglé de manière à ce que le taux de charge de l'élément emmagasinant de l'oxygène du catalyseur soit maintenue dans une plage de consigne moyenne entre un taux maximum et un taux minimum,
**caractérisé en ce que**
pour réguler le mélange air/carburant dans une phase de contrôle, on contrôle la dérive du taux de charge à partir de la plage de consigne en augmentant ou en abaissant d'une certaine valeur le taux de charge de la valeur initiale momentanée grâce à un appauvrissement ou à un enrichissement de courte durée du mélange air/carburant amené au moteur, et en le ramenant immédiatement à la valeur initiale par une modification contraire de courte durée du mélange air/carburant (séquence d'impulsions pauvre/riche ou séquence d'impulsions riche/pauvre), et en enrichissant ou en appauvrissant le mélange air/carburant pour la correction du taux de charge en cas d'irruption des gaz d'échappement pauvres ou riches par le catalyseur pendant la phase de contrôle, la valeur suivant laquelle le taux de charge est augmenté ou diminué pendant la phase de contrôle étant mesurée de manière à ce qu'aucune irruption des gaz d'échappement riches ou pauvres n'ait lieu par le catalyseur lorsque le taux de charge de l'élément emmagasinant de l'oxygène se trouve dans la plage de consigne.

2. Procédé selon la revendication 1,
**caractérisé en ce que**
la composition du mélange air/carburant amené au moteur à combustion est régulée à l'aide d'un capteur d'oxygène disposé dans la ligne des gaz d'échappement avant le catalyseur, et l'irruption possible des gaz d'échappement pauvres ou riches par le catalyseur est calculée à l'aide d'un deuxième capteur d'oxygène placé derrière le catalyseur dans la ligne des gaz d'échappement.

3. Procédé selon la revendication 2,
**caractérisé en ce que**
la phase de contrôle est répétée plusieurs fois pendant le fonctionnement du moteur, le laps de temps entre deux phases de contrôle étant adapté aux conditions de fonctionnement respectives du moteur et à l'écart de régulation constaté.

4. Procédé selon la revendication 3,
**caractérisé en ce que**
la séquence d'impulsions est respectivement inversée en phases de contrôle successives de sorte qu'un contrôle avec une séquence d'impulsions riche/pauvre suit un contrôle avec une séquence d'impulsions pauvre/riche.

5. Procédé selon la revendication 4,
**caractérisé en ce que**
respectivement deux phases de contrôle successives sont réunies en une seule phase de contrôle de sorte que le contrôle a lieu avec une séquence d'impulsions pauvre/riche/pauvre ou avec une séquence s'impulsions riche/pauvre/riche, la durée d'impulsions et la hauteur d'impulsions de l'impulsion moyenne respective étant déterminées pour que le taux de charge reprenne après la fin de la phase de contrôle la valeur initiale qu'elle avait avant le début du contrôle.

6. Procédé selon la revendication 3,
**caractérisé en ce que**
le besoin de correction constaté dans les phases de contrôle pour la densité est utilisé pour adapter les paramètres pour la régulation du rapport air/carburant (régulation lambda) à l'aide d'un capteur d'oxygène disposé avant le catalyseur.

7. Procédé selon la revendication 3,
**caractérisé en ce que**
le rapport air/carburant lambda normé sur des conditions stoechiométriques entre deux phases de contrôle successives est régulé à une valeur constante de λ = 1.

8. Procédé selon la revendication 3,
**caractérisé en ce que**
le rapport air/carburant entre deux phases de contrôle successives est modulé à une fréquence comprise entre 0,1 et 5 Hz et à une amplitude du rapport air/carburant comprise entre ±0,1 et ±2,0.

9. Procédé selon la revendication 8,
**caractérisé en ce que**
les séquences d'impulsion de la modulation du rapport air/carburant appliquées dans les phases de contrôle sont superposées en phase.

10. Procédé selon la revendication 8,
**caractérisé en ce que**
la durée des séquences d'impulsions appliquées dans les phases de contrôle sont comprises entre 1 et 50% de la durée de la modulation du rapport air/carburant, et les phases de contrôle sont superposées au rapport air/carburant dans ses points d'inflexion.

11. Procédé selon la revendication 1,
**caractérisé en ce que**
le volume des impulsions, défini comme son intégrale temporelle par rapport à l'indice d'air 1, est réduit pendant la durée de vie du catalyseur pour être adapté à la capacité de stockage en baisse du catalyseur.

12. Procédé selon la revendication 11,
**caractérisé en ce qu'**
un signal pour le remplacement du catalyseur est réglé lorsque les impulsions sont inférieures à un volume minimum.

13. Procédé selon la revendication 1,
**caractérisé en ce que**
la séquence d'impulsions choisie est répétée plusieurs fois dans la phase de contrôle.

14. Procédé selon la revendication 1,
**caractérisé en ce que**
pour réguler le mélange air/carburant dans une première phase de contrôle, on contrôle la dérive vers le haut du taux de charge hors de la plage de consigne, en augmentant d'une première valeur le taux de charge en partant de la valeur initiale momentanée grâce à l'appauvrissement à court terme du mélange air/carburant amené au moteur et en le ramenant simultanément à la valeur initiale en enrichissant à court terme le mélange air/carburant (séquence d'impulsions riche/pauvre), et dans une deuxième phase de contrôle on contrôle la dérive vers le bas du taux de charge hors de la plage de consigne, en abaissant d'une deuxième valeur le taux de charge de la valeur initiale momentanée par un enrichissement de courte durée du mélange air/carburant amené au moteur et en le ramenant immédiatement à la valeur initiale par un appauvrissement de courte durée du mélange air/carburant (séquence d'impulsions riche/pauvre), et on enrichit le mélange air/carburant pour la correction du taux de charge en cas d'irruption des gaz d'échappement pauvres traversant le catalyseur pendant la séquence d'impulsions pauvre/riche, et on appauvrit le mélange air/carburant en cas d'irruption des gaz d'échappement riches traversant le catalyseur pendant la séquence d'impulsions riche/pauvre, les valeurs suivant lesquelles le taux de charge augmenté ou diminué pendant les phases de contrôle étant mesurées de manière à ce qu'aucune irruption des gaz d'échappement riches ou pauvres n'ait lieu à travers le catalyseur lorsque le taux de charge de l'élément emmagasinant de l'oxygène se trouve dans la plage de consigne.

15. Procédé selon la revendication 1,
**caractérisé en ce que**
pour réguler le mélange air/carburant, on contrôle vers le haut l'éruption de la densité hors de la plage de consigne ou vers le bas pendant une phase de contrôle en augmentant d'une première valeur le taux de charge à partir de la valeur initiale momentanée grâce à un appauvrissement de courte durée du mélange air/carburant amené au moteur, puis en l'abaissant d'une deuxième valeur par rapport à la valeur initiale par un enrichissement de courte durée du mélange air/carburant et en le ramenant finalement à la valeur initiale par un appauvrissement de courte durée du mélange air/carburant (séquence d'impulsions pauvre/riche/pauvre), et pour la correction du taux de charge on enrichit le mélange air/carburant en cas d'irruption des gaz d'échappement pauvres à travers le catalyseur et on appauvri le mélange air/carburant en cas d'irruption des gaz d'échappement riches à travers le catalyseur, les valeurs suivant lesquelles le taux de charge est augmenté ou diminué pendant la phase de contrôle étant mesurées pour qu'aucune irruption des gaz d'échappement riches ou pauvres n'ait lieu par la catalyseur lorsque le taux de charge de l'élément emmagasinant de l'oxygène se trouve dans la plage de consigne.
